# EUROPÄISCHE PATENTSCHRIFT

(11) **EP 3 009 275 B1**
(45) Veröffentlichungstag und Bekanntmachung des Hinweises auf die Patenterteilung: **22.05.2019**
(21) Anmeldenummer: 15178746.2
(22) Anmeldetag: 29.07.2015
(51) Int. Cl.: B60C 11/03, B60C 11/12, B60C 11/13

(54) **FAHRZEUGLUFTREIFEN**
PNEUMATIC TYRES FOR A VEHICLE
PNEUMATIQUES DE VEHICULE

(30) Priorität: 16.10.2014 DE 102014220977
(43) Veröffentlichungstag der Anmeldung: 20.04.2016
(73) Patentinhaber: Continental Reifen Deutschland GmbH, 30165 Hannover (DE)
(72) Erfinder: Rittweger, Stefan, 30163 Hannover (DE)
(74) Vertreter: Finger, Karsten

(56) Entgegenhaltungen:
- EP-A1- 2 540 526
- US-A- 6 109 317
- US-A1- 2009 199 943

## Beschreibung

Die Erfindung betrifft einen Fahrzeugluftreifen mit einem Laufstreifen mit einem laufrichtungsgebundenen Laufstreifenprofil und zumindest einem durch zwei Umfangsrillen begrenzten Profilband, in welchem eine Vielzahl von Schrägrillen verläuft, wobei jede Schrägrille durch zwei einander gegenüberliegende Rillenflanken und einen die Rillenflanken verbindenden Rillengrund begrenzt ist, wobei die Schrägrille einen ersten Rillenabschnitt, einen mittleren Rillenabschnitt und einen Rillenendabschnitt aufweist, wobei zumindest zwei dieser Abschnitte voneinander unterschiedliche Querschnittsflächen aufweisen, wobei der erste Rillenabschnitt innerhalb des Profilbandes ausläuft und zumindest der erste und der mittlere Rillenabschnitt unter einem zumindest im Wesentlichen gleich großen Winkel von 10° bis 20° zur Umfangsrichtung verlaufen, wobei beim Abrollen des Reifens die Schrägrille mit dem ersten Rillenabschnitt zuerst in den Untergrund eintritt.

Um Aquaplaning vorzubeugen ist es bekannt, Laufstreifen von Fahrzeugluftreifen mit Umfangs- und Querrillen zu versehen, die eine relativ große Breite und Tiefe aufweisen, sodass auf der Fahrbahn befindliches Wasser von der Laufstreifenoberfläche wegbefördert werden kann und derart ein Aufschwimmen des Reifens verhindert wird.

Ein Fahrzeugluftreifen der eingangs genannten Art ist beispielsweise aus der US 6 109 317 A bekannt. Die im Laufstreifen verlaufenden Schrägrillen weisen eine Breite auf, welche zu den beiden Enden der Schrägrillen abnimmt. Bevorzugter Weise verlaufen in jeder Laufstreifenhälfte solche Schrägrillen derart, dass der Laufstreifen ein "gepfeiltes" Profil aufweist.

Aus der EP 0 867 310 A2 ist ein weiterer Fahrzeugluftreifen mit einem Laufstreifen bekannt, welcher eine Vielzahl von Schrägrillen aufweist, wobei mindestens ein Teil der Schrägrillen in eine in der Nähe des Reifenzenits befindliche Umfangsrille mündet. Ein Reifen mit einem derartigen Laufstreifen soll eine gute Lenkstabilität auf trockener Straße sowie ein geringes Abrollgeräusch aufweisen.

Die EP 2 540 526 A1 offenbart einen Fahrzeugluftreifen mit einem laufrichtungsgebunden und "asymmetrisch" ausgeführten Laufstreifen, welcher ein breites, durch Umfangsrillen begrenztes Profilband aufweist, welches von Schrägrillen durchquert ist.

Aus der US 2009/0199943 A1 ist ein weiterer Fahrzeugluftreifen mit einem Schrägrillen aufweisenden Laufstreifen bekannt, wobei sich die Schrägrillen ausgehend vom Bereich der Äquatorialebene erstrecken und in schulterseitig verlaufende Querrillen übergehen.

Die DE 39 42 043 A1 offenbart einen Fahrzeugluftreifen mit einem laufrichtungsgebundenen Laufstreifenprofil, welches V-förmig und zur Umfangsrichtung verlaufende Schrägrillen aufweist, wobei jede Schrägrille eine Knickstelle im Schulterbereich besitzt, sodass die Schrägrillen schulterseitige Abschnitte aufweisen, die unter einem Winkel von 95° bis 135° von im mittleren Bereich des Laufstreifens verlaufenden Schrägrillenabschnitten abgeknickt sind. Ein solcher Reifen soll ein gutes Wasserdrainagevermögen und gute Nassgriffeigenschaften aufweisen.

Aus der EP 0 713 789 A1 ist ein Fahrzeugluftreifen bekannt, dessen Laufstreifen durch Schrägrillen und Querrillen in Profilblöcke gegliedert ist. Die Schrägrillen verlaufen unter kleinen spitzen Winkeln zur Umfangsrichtung. Ein derart ausgeführter Reifen soll ebenfalls ein hohes Wasserableitvermögen aufweisen.

Wie oben erwähnt, ist es üblich, zur Erzielung eines hohen Wasserdrainagevermögens Quer- und Umfangsrillen mit großen Querschnittflächen auszuführen. Solche Rillen verursachen allerdings besonders unangenehme Abrollgeräusche und wirken sich durch eine gewisse Destabilisierung der Profilpositive negativ auf die Bremseigenschaften auf trockener Fahrbahn und die Handlingeigenschaften aus, sodass der Zielkonflikt zwischen einem hohen Wasserdrainagevermögen und guten Bremseigenschaften auf trockener Fahrbahn bzw. einem geringem Abrollgeräusch bislang nur unzureichend gelöst ist.

Der Erfindung liegt daher die Aufgabe zugrunde, einen Laufstreifen eines Fahrzeugluftreifen derart zu gestalten, dass bei einem geringeren Abrollgeräusch gleichzeitig ein hohes Wasserdrainagevermögen und gute Bremseigenschaften auf trockenen Fahrbahnen gewährleistet sind.

Gelöst wird die gestellte Aufgabe erfindungsgemäß dadurch, dass die Tiefe der Schrägrille zumindest im ersten Rillenabschnitt und vom innerhalb des Profilbandes auslaufenden Rillenende ausgehend, insbesondere kontinuierlich, auf eine erste Tiefe zunimmt, wobei im mittleren Rillenabschnitt von der ersten Tiefe ausgehend ein Rillengrundeinschnitt ausgebildet ist, welcher zumindest über den Großteil der Erstreckung des mittleren Rillenabschnittes verläuft und in eine zweite Tiefe reicht, und wobei zumindest im mittleren Rillenabschnitt an die Rillenflanken zum Rillengrund gehörende Schrägflanken anschließen, die unter einem Winkel von 40° bis 50° zur radialen Richtung verlaufen.

Durch die sich über die Erstreckung erfindungsgemäßer Schrägrillen verändernden Querschnittsflächen kann von der Laufstreifenoberfläche in die Schrägrillen eintretendes Wasser besonders effektiv von der Laufstreifenoberfläche wegbefördert werden. Die sich abschnittsweise verändernde Rillentiefe sowie der Rillengrundeinschnitt tragen ebenfalls zu einem guten Wasserdrainagevermögen der Schrägrillen bei, sodass Fahrzeugluftreifen, deren Laufstreifen solche Schrägrillen enthalten, gute Aquaplaningeigenschaften aufweisen. Die den Rillengrund zumindest im mittleren Abschnitt mitbildenden Schrägflanken stabilisieren das Profilband. Der Rillengrundeinschnitt in diesem Abschnitt sorgt für eine gewisse Nässeperformance auch bei stark abgefahrenem Laufstreifen. Der Rillenquerschnitt kann insgesamt im Vergleich zu herkömmlichen Querrillen kleiner gehalten werden, was für das Abrollgeräusch von Vorteil ist.

Bei einer besonders vorteilhaften Ausführung der Erfindung setzen sich die Schrägflanken im ersten und im dritten Rillenabschnitt fort. Diese Maßnahme erhöht den versteifenden Effekt der Schrägflanken.

Besonders vorteilhaft ist es, wenn der Rillengrund im ersten Rillenabschnitt in Form einer Rampe, welche unter einem Winkel von 10° bis 30° zur radialen Richtung geneigt verläuft, ausgeführt ist. Derartige Rampen unterstützen ein optimales Einfließen von Wasser in die Schrägrille.

Bei einer vorteilhaften Ausführungsform der Erfindung besteht die Rampe, in Draufsicht betrachtet, aus einem ersten im Wesentlichen rechteckigen Rampenabschnitt und einem zweiten im Wesentlichen dreieckigen Rampenabschnitt, wobei der erste Rampenabschnitt an das innerhalb des Profilbandes auslaufende Rillenende anschließt. Insbesondere durch den im Wesentlichen dreieckigen Rampenabschnitt wird in die Schrägrille eintretendes Wasser zusätzlich beschleunigt und dadurch die Wasserableitung aus der Laufstreifenmitte unterstützt.

Für eine von Verwirbelungen weitgehend freie Wasserableitung ist es günstig, wenn die Rampe beim Rillengrundeinschnitt des mittleren Rillenabschnittes endet.

Gemäß einer vorteilhaften Ausführungsform schließen die Schrägflanken zumindest an den im Wesentlichen dreieckigen Rampenabschnitt an.

Gemäß einer weiteren vorteilhaften Ausführungsform verläuft der Rillengrundeinschnitt im mittleren Rillenabschnitt über zumindest 90 % der Erstreckung dieses Abschnittes.

Bevorzugter Weise weist der der Rillengrundeinschnitt eine Einschnitttiefe von 2,0 mm bis 3,0 mm auf.

Bei einer weiteren bevorzugten Ausführungsform weist der Rillengrundeinschnitt eine Breite von 0,4 mm bis 1,0 mm auf.

Bei einer weiteren für eine gute Wasserableitung vorteilhaften Ausführungsform der Erfindung mündet der Rillenendabschnitt in die das Profilband laufstreifenaußenseitig begrenzende Umfangsrille ein, wobei der Rillenendabschnitt gegenüber den anderen Rillenabschnitten zur Umfangsrille geknickt und zur Umfangsrichtung unter einem Winkel von 25° bis 55° verläuft.

Gemäß einer weiteren vorteilhaften Ausführungsform der Erfindung ist der Rillengrund im Rillenendabschnitt von den beiden Schrägflanken gebildet.

Bevorzugter Weise weist die Schrägrille eine maximale Breite von 3,0 mm auf, wobei die Breite orthogonal zur Erstreckungsrichtung der Schrägrille ermittelt wird.

Außerdem ist es vorteilhaft, wenn in jeder Laufstreifenhälfte jeweils ein Profilband mit Schrägrillen vorgesehen ist, sodass ein gepfeiltes Profil gebildet wird. Bei einem derart ausgeführten Laufstreifen kommen die Vorteile erfindungsgemäß ausgeführter Schrägrillen besonders zum Tragen.

Weitere Merkmale, Vorteile und Einzelheiten der Erfindung werden nun anhand der Zeichnung, in der eine Ausführungsform der Erfindung darstellt ist, näher beschrieben.

Dabei zeigen
Fig. 1 einen Ausschnitt einer Ausführungsform eines Laufstreifens eines Fahrzeugluftreifens in Draufsicht,
Fig. 2 eine vergrößerte, detaillierte Ansicht einer Schrägrille und
Fig. 3 bis Fig. 7 Schnittdarstellungen entlang der Linien III-III, IV-IV, V-V, VI-VI und VII-VII der Fig. 2.

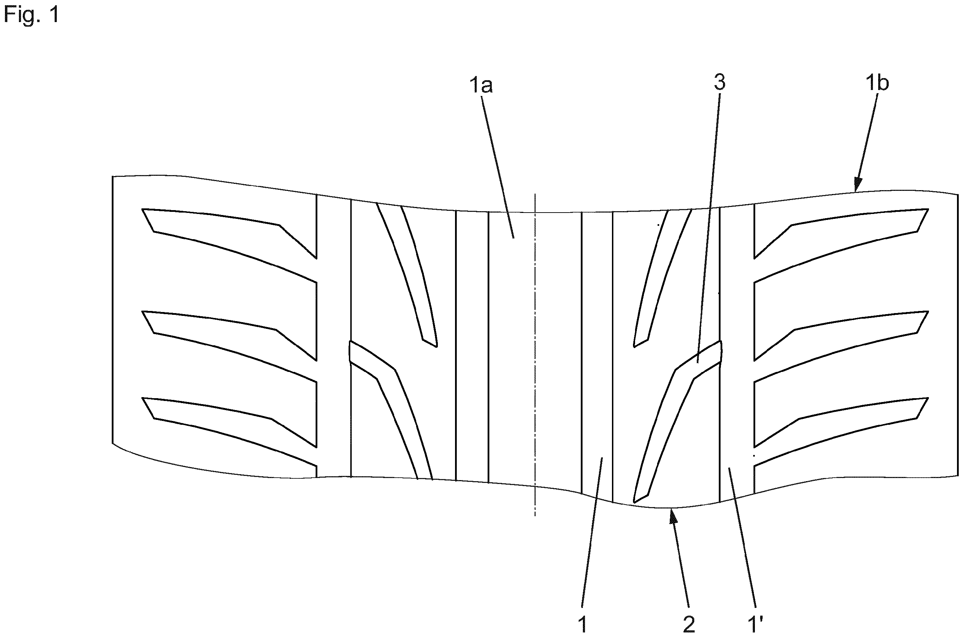

In Fig. 1 sind von einem Laufstreifen zwei beidseitig durch je eine Umfangsrille 1,1' begrenzte Profilbänder 2, welche jeweils bevorzugt im mittleren Laufstreifenbereich und je eine in einer der Laufstreifenhälften angeordnet sind, dargestellt. Zwischen den Umfangsrillen 1, im zentralen Bereich des Laufstreifens, verläuft ein weiteres Profilband 1a, an die Umfangsrillen 1' schließen schulterseitige Profilpositive, wie beispielsweise je eine schulterseitige Blockreihe 1b, an.

In jedem Profilband 2 ist eine Vielzahl von Schrägrillen 3 ausgebildet, wobei die Schrägrillen 3 in der einen Laufstreifenhälfte zu jenen in der anderen Laufstreifenhälfte gegensinnig verlaufen, sodass der Fahrzeugluftreifen ein "gepfeiltes" und laufrichtungsgebundenes Profil aufweist. Die nicht gezeigten Laufstreifenbereiche können in bekannter Weise ausgeführt sein.

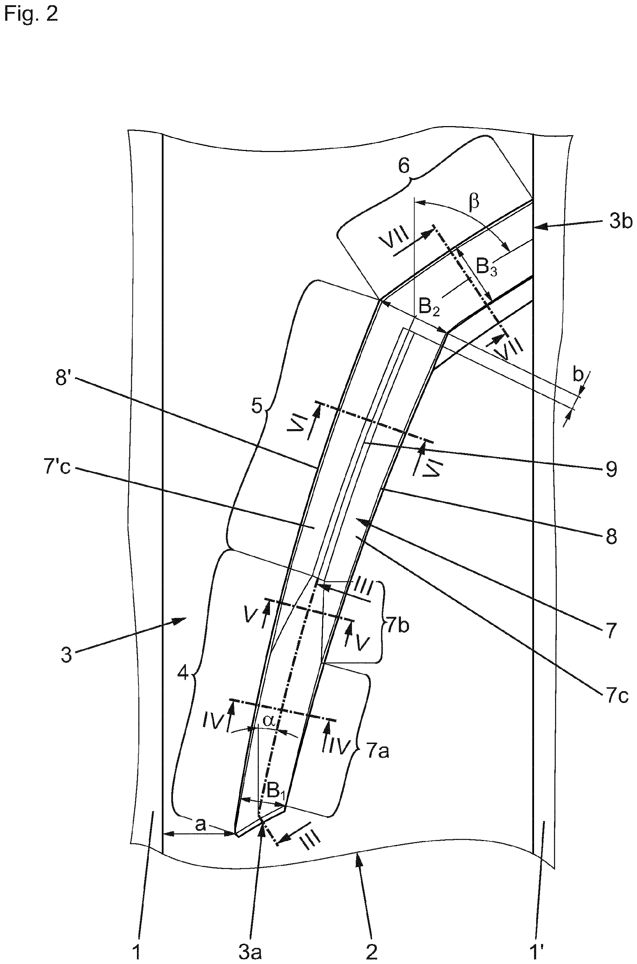

Wie Fig. 2 zeigt, mündet die Schrägrille 3 mit ihrem einen Rillenende 3b in die Umfangsrille 1' und weist ein innerhalb des Profilbandes 2 auslaufendes, laufstreifeninnenseitiges Rillenende 3a auf, welches einen axialen Abstand a von 2,0 mm bis 3,0 mm zur Umfangsrille 1 aufweist. Die Ausrichtung der Schrägrillen 3 im Laufstreifen ist derart, dass beim Abrollen des Reifens jeweils das näher zum Reifenzenit befindliche Rillenende 3a zuerst in die Bodenaufstandsfläche eintritt.

Gemäß der Erfindung besitzt die Schrägrille 3 eine sich über ihre Erstreckung speziell verändernde Querschnittsfläche und setzt sich aus einem innerhalb des Profilbandes 2 auslaufenden ersten Rillenabschnitt 4, einem mittleren Rillenabschnitt 5 und einem in die Umfangsrille 1' mündenden Rillenendabschnitt 6 zusammen, wobei der mittlere Rillenabschnitt 5 die beiden anderen Rillenabschnitte 4, 6 miteinander verbindet.

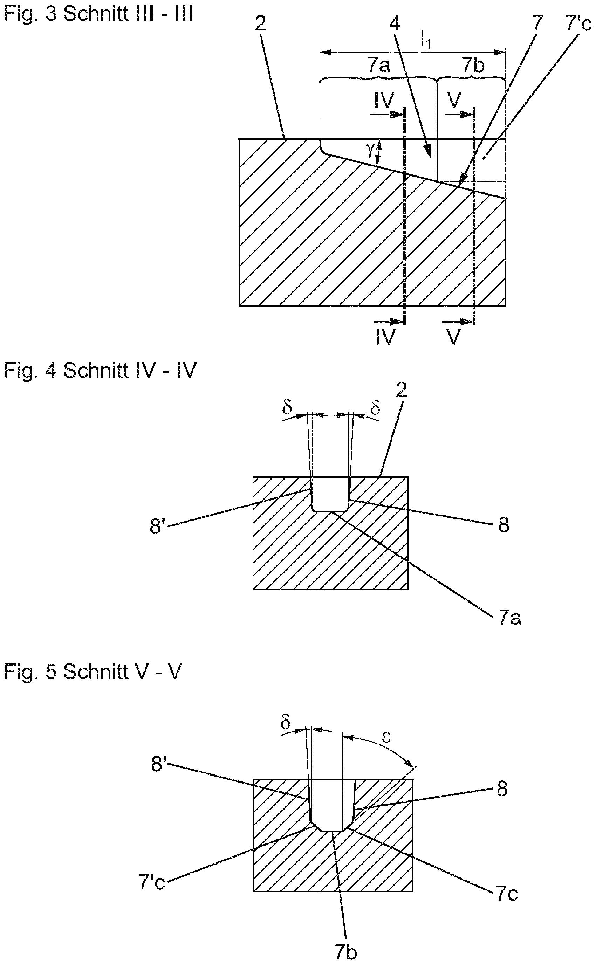

Die Schrägrille 3 ist in sämtlichen Rillenabschnitten 4, 5, 6 durch einen Rillengrund 7 und zwei einander gegenüberliegende Rillenflanken 8, 8' begrenzt, wobei die Rillenflanken 8, 8' über die gesamte Erstreckung der Schrägrille 3 jeweils unter einem Winkel δ (Fig. 4) von bis zu 3° zur radialen Richtung verlaufen. Der Rillengrund 7 ist in den einzelnen Rillenabschnitten 4, 5, 6 unterschiedlich gestaltet.

In Draufsicht verlaufen die Rillenabschnitte 4, 5, 6 geringfügig gebogen, wobei der mittlere Rillenabschnitt 5 und der erste Rillenabschnitt 4 im Wesentlichen in übereinstimmender Richtung verlaufen. Bedingt durch ihren leicht bogenförmigen Verlauf schließen die Rillenabschnitte 4, 5 einen sich kontinuierlich verändernden spitzen Winkel α von vorzugsweise 10° bis 20° mit der Umfangsrichtung ein. Der Rillenendabschnitt 6 verläuft unter einem im Wesentlichen konstanten Winkel β von 25° bis 55° zur Umfangsrichtung.

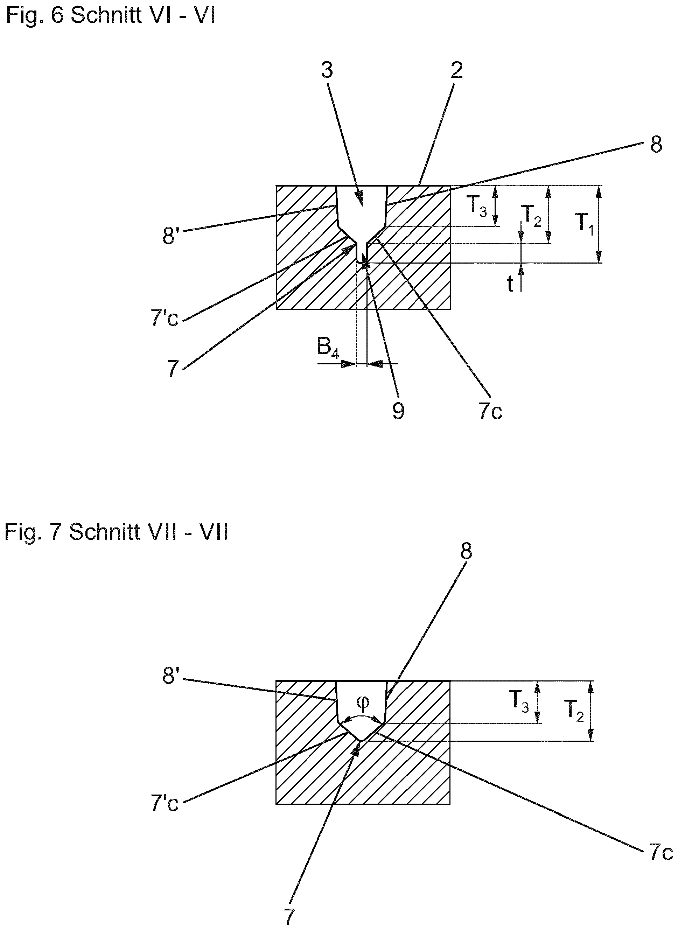

Im Bereich des laufstreifeninnenseitigen Rillenendes 3a weist die Schrägrille 3 an der Laufstreifenoberfläche eine Breite B₁ von 3,5 mm bis 5,5 mm auf. Am Übergang des mittleren Rillenabschnittes 5 zum Rillenendabschnitt 6 besitzt die Schrägrille 3 eine Breite B₂ > B₁ von 4,5 mm bis 6,5 mm. Dementsprechend weist die Schrägrille 3 eine im Bereich der Rillenabschnitte 4, 5 und vom laufstreifeninnenseitigen Rillenende 3a ausgehende kontinuierlich zunehmende Breite auf. Im Bereich des Rillenendabschnittes 6 besitzt die Schrägrille 3 eine weitgehend konstante Breite B₃, welche geringfügig größer ist als als oder gleich groß ist wie die Breite B₂ und 5,5 mm bis 6,5 mm beträgt. Ihre tiefste Stelle weist die Schrägrille 3 im Bereich des mittleren Rillenabschnittes 5 auf, hier besitzt die Schrägrille 3, wie in Fig. 6 dargestellt, eine Tiefe T₁ von bis zu 9,0 mm.

Nachfolgend wird die geometrische Ausgestaltung der einzelnen Rillenabschnitte 4, 5, 6 anhand der Schnittdarstellungen näher beschrieben, wobei in Fig. 3 auch die Linien IV-IV und V-V eingezeichnet sind. Der Schnitt entlang der Linie III-III ist ein Längsschnitt durch den ersten Rillenabschnitt 4, sodass die zum Schnitt gehörende Schnittebene zu beiden Rillenflanken 8, 8' den gleichen Abstand aufweist. Die weiteren Schnittdarstellungen zeigen je einen Querschnitt durch die Schrägrille 3.

Wie Fig. 3 zeigt, weist der Rillengrund 7 im Bereich des ersten Rillenabschnittes 4 eine aus zwei Rampenabschnitten 7a, 7b zusammengesetzte Rampe auf, welche unter einem Winkel γ von 10° bis 30° zur Oberfläche des Profilbandes 2 verläuft und eine an der Laufstreifenoberfläche gemessene Erstreckungslänge l₁ von 25,0 mm bis 50,0 mm besitzt. Aus Fig. 2 ist zu erkennen, dass der Rampenabschnitt 7a im Wesentlichen rechteckig und der Rampenabschnitt 7b im Wesentlichen dreieckig, genauer trapezförmig, ausgeführt ist. In Richtung des mittleren Rillenabschnittes 5 mündet der Rampenabschnitt 7b in einen den Rillengrund 7 im mittleren Rillenabschnitt 5 mittig fast vollständig durchlaufenden Rillengrundeinschnitt 9. Der Rillengrundeinschnitt 9 endet in einem Abstand b von bis zu 5 mm zum Rillenendabschnitt 6.

Wie Fig. 4 in Kombination mit Fig. 2 zeigt, ist die Schrägrille 3 im Bereich des rechteckigen Rampenabschnittes 7a durch diesen und die anschließenden Rillenflanken 8, 8' begrenzt.

Wie Fig. 2 in Kombination mit Fig. 5 zeigt, schließen an den Rampenabschnitt 7b zwei Schrägflanken 7c, 7c' an, welche unter einem Winkel ε von 40° bis 50° zur radialen Richtung verlaufen, sodass die Schrägrille 3 im Bereich des Rampenabschnittes 7b durch diesen, die Schrägflanken 7c, 7c' und die Rillenflanken 8, 8' begrenzt ist. Die Schrägflanken 7c, 7c' setzen sich sowohl über den gesamten mittleren Rillenabschnitt 5 als auch über den gesamten Rillenendabschnitt 6 fort.

Fig. 6 zeigt den Rillengrund 7 im Bereich des mittleren Rillenabschnittes 5 mit dem oben erwähnten Rillengrundeinschnitt 9, welcher von den Schrägflanken 7c, 7c' ausgehend in radialer Richtung verläuft. Die Schrägrille 3 wird in diesem Rillenabschnitt 5durch den Rillengrundeinschnitt 9 - über zumindest 90 % der Erstreckung des Abschnittes 5-, ferner die daran angrenzenden Schrägflanken 7c, 7c' und die Rillenflanken 8, 8' begrenzt. Der Rillengrundeinschnitt 9 verleiht der Schrägrille 3 im mittleren Rillenabschnitt 5 ihre größte Tiefe T₁. Der Rillengrundeinschnitt 9 selbst beginnt in einer Tiefe T₂ von 70 % bis 85 % der Tiefe T₁ und weist eine Einschnitttiefe t von 2,0 mm bis 3,0 mm auf. Seine Breite B₄ beträgt 0,4 mm bis 1,0 mm. Die Schrägflanken 7c, 7c' schließen im Bereich des mittleren Rillenabschnittes 5 in der Tiefe T₂ an den Rillengrundeinschnitt 9 an und enden in einer Tiefe T₃, welche vorzugsweise 50 % bis 70 % der Tiefe T₁ entspricht.

Wie der Querschnitt in Fig. 7 zeigt, ist der Rillengrund 7 im Rillenendabschnitt 6 ausschließlich durch die Schrägflanken 7c, 7c', welche unter einem Winkel ϕ von 40° bis 50° zueinander verlaufen, gebildet, wodurch der Rillengrund 7 im Querschnitt eine V-Form besitzt.

Abweichend von der dargestellten Ausführung kann der Rillenendabschnitt 6 analog zum ersten Rillenabschnitt 4 ausgeführt sein, sodass die Schrägrille 3 nicht in die Umfangsrille 1' mündet, sondern auch mit ihrem zweiten Ende innerhalb des Profilbandes 2 ausläuft. Eine derart gestaltete Schrägrille 3 besitzt an jedem ihrer Endabschnitte eine zur Laufstreifenoberfläche ansteigende Rampe. Außerdem können die einzelnen Rillenabschnitte 4, 5, 6, in Draufsicht betrachtet, geradlinig verlaufen. Darüber hinaus kann die Schrägrille 3 eine konstante Breite über ihre gesamte Erstreckung aufweisen. Außerdem kann im Rillenabschnitt 4 nicht nur der Rampenabschnitt 7b, sondern der gesamte in diesem Abschnitt 4 befindliche Rillengrund 7 in Draufsicht im Wesentlichen dreieckig ausgeführt sein, sodass die Schrägflanken 7c, 7c' bis zur Laufstreifenoberfläche verlaufen.

Während des Fahrbetriebes tritt etwaiges von der Fahrbahn vom Laufstreifen aufgenommenes Wasser in die Schrägrillen 3 ein und wird, bedingt durch die spezielle Geometrie der Schrägrillen 3 optimal in die Umfangsrillen 1 abgeleitet. Die Rampenabschnitte 7a, 7b stabilisieren die Profilbänder 2 und unterstützen eine wirbelfreie Wassereinströmung in die Schrägrillen 3.

Die besondere Ausgestaltung im Rampenabschnitt 7b und im mittleren Rillenabschnitt 5 bewirkt eine Beschleunigung des Wasserstromes, wodurch die Wasserableitung ebenfalls unterstützt wird. Der Rillenendabschnitt 6 ermöglicht eine optimale Ableitung in die Umfangsrille 1'. Derartige Schrägrillen 3 bewirken im Laufstreifen eines Fahrzeugluftreifens daher verbesserte Aquaplaningeigenschaften und, bedingt durch die Stabilisierung der Profilbänder, gute Brems- und Handlingeigenschaften auf trockenen Fahrbahnen.

Darüber hinaus kann durch den Einsatz von derartigen Schrägrillen 3 auf Querrillen mit großer Querschnittsfläche verzichtet werden, sodass der Laufstreifen weniger geräuscherzeugendes Volumen aufweist und daher ein geräuschreduzierter Fahrbetrieb ermöglicht wird.

### Bezugsziffernliste

- 1: Umfangsrille
- 1': Umfangsrille
- 1a: Profilband
- 1b: Blockreihe
- 2: Profilband
- 3: Schrägrille
- 3a: Rillenende
- 3b: Rillenende
- 4: erster Rillenabschnitt
- 5: mittlerer Rillenabschnitt
- 6: Rillenendabschnitt
- 7: Rillengrund
- 7a: rechteckiger Rampenabschnitt
- 7b: dreieckiger Rampenabschnitt
- 7c: Schrägflanke
- 7c': Schrägflanke
- 8: Rillenflanke
- 8': Rillenflanke
- 9: Rillengrundeinschnitt
- B₁, B₂, B₃: Breite der Rillenabschnitte
- T₁, T₂, T₃: Tiefe
- t: Einschnitttiefe
- α, β, γ, δ, ε, ϕ: Winkel

## Patentansprüche

1. Fahrzeugluftreifen mit einem Laufstreifen mit einem laufrichtungsgebundenen Laufstreifenprofil und zumindest einem durch zwei Umfangsrillen (1, 1') begrenzten Profilband (2), in welchem eine Vielzahl von Schrägrillen (3) verläuft, wobei jede Schrägrille (3) durch zwei einander gegenüberliegende Rillenflanken (8, 8') und einen die Rillenflanken (8, 8') verbindenden Rillengrund (7) begrenzt ist,
wobei die Schrägrille (3) einen ersten Rillenabschnitt (4), einen mittleren Rillenabschnitt (5) und einen Rillenendabschnitt (6) aufweist, wobei zumindest zwei dieser Abschnitte (4, 5) voneinander unterschiedliche Querschnittsflächen aufweisen, wobei der erste Rillenabschnitt (4) innerhalb des Profilbandes (2) ausläuft und zumindest der erste und der mittlere Rillenabschnitt (4, 5) unter einem zumindest im Wesentlichen gleich großen Winkel (α) von 10° bis 20° zur Umfangsrichtung verlaufen, wobei beim Abrollen des Reifens die Schrägrille (3) mit dem ersten Rillenabschnitt (4) zuerst in den Untergrund eintritt,
**dadurch gekennzeichnet,**
**dass** die Tiefe der Schrägrille (3) zumindest im ersten Rillenabschnitt (4) und vom innerhalb des Profilbandes (2) auslaufenden Rillenende (3a) ausgehend, insbesondere kontinuierlich, auf eine erste Tiefe (T₂) zunimmt, wobei im mittleren Rillenabschnitt (5) von der ersten Tiefe (T₂) ausgehend ein Rillengrundeinschnitt (9) ausgebildet ist, welcher zumindest über den Großteil der Erstreckung des mittleren Rillenabschnittes (5) verläuft und in eine zweite Tiefe (T₁) reicht, und wobei zumindest im mittleren Rillenabschnitt (5) an die Rillenflanken (8, 8') zum Rillengrund (7) gehörende Schrägflanken (7c, 7'c) anschließen, die unter einem Winkel (ε) von 40° bis 50° zur radialen Richtung verlaufen.

2. Fahrzeugluftreifen nach Anspruch 1, **dadurch gekennzeichnet, dass** sich die Schrägflanken (7c, 7'c) im ersten und im dritten Rillenabschnitt (4, 6) fortsetzen.

3. Fahrzeugluftreifen nach Anspruch 1 oder 2, **dadurch gekennzeichnet, dass** der Rillengrund (7) im ersten Rillenabschnitt (4) eine Rampe, welche unter einem Winkel (γ) von 10° bis 30° zur radialen Richtung verläuft, aufweist.

4. Fahrzeugluftreifen nach Anspruch 3, **dadurch gekennzeichnet, dass** die Rampe, in Draufsicht betrachtet, aus einem ersten im Wesentlichen rechteckigen Rampenabschnitt (7a) und einem zweiten im Wesentlichen dreieckigen Rampenabschnitt (7b) besteht, wobei der erste Rampenabschnitt (7a) an das innerhalb des Profilbandes (2) auslaufende Rillenende (3a) anschließt.

5. Fahrzeugluftreifen nach Anspruch 3 oder 4, **dadurch gekennzeichnet, dass** die Rampe (7a, 7b) beim Rillengrundeinschnitt (9) des mittleren Rillenabschnittes (5) endet.

6. Fahrzeugluftreifen nach einem der Ansprüche 1 bis 5, **dadurch gekennzeichnet, dass** die Schrägflanken (7c, 7'c) zumindest an den im Wesentlichen dreieckigen Rampenabschnitt (7b) anschließen.

7. Fahrzeugluftreifen nach einem der Ansprüche 1 bis 6, **dadurch gekennzeichnet, dass** der Rillengrundeinschnitt (9) im mittleren Rillenabschnitt (5) über zumindest 90 % der Erstreckung dieses Abschnittes (5) verläuft.

8. Fahrzeugluftreifen nach einem der Ansprüche 1 bis 7, **dadurch gekennzeichnet, dass** der Rillengrundeinschnitt (9) eine Einschnitttiefe (t) von 2,0 mm bis 3,0 mm aufweist.

9. Fahrzeugluftreifen nach einem der Ansprüche 1 bis 8, **dadurch gekennzeichnet, dass** der Rillengrundeinschnitt (9) eine Breite (B₄) von 0,4 mm bis 1,0 mm aufweist.

10. Fahrzeugluftreifen nach einem der Ansprüche 1 bis 9, **dadurch gekennzeichnet, dass** der Rillenendabschnitt (6) in die das Profilband (2) laufstreifenaußenseitig begrenzende Umfangsrille (1') einmündet.

11. Fahrzeugluftreifen nach Anspruch 10, **dadurch gekennzeichnet, dass** der Rillenendabschnitt (6) gegenüber dem mittleren Rillenabschnitt (5) zur Umfangsrille (1') abgeknickt ist und zur Umfangsrichtung unter einem Winkel (β) von 25° bis 55° verläuft.

12. Fahrzeugluftreifen nach einem der Ansprüche 1 bis 11, **dadurch gekennzeichnet, dass** der Rillengrund (7) im Rillenendabschnitt (6) von den beiden Schrägflanken (7c, 7c') gebildet ist.

13. Fahrzeugluftreifen nach einem der Ansprüche 1 bis 12, **dadurch gekennzeichnet, dass** die Schrägrille (3) eine maximale Breite von 3,0 mm aufweist, wobei die Breite orthogonal zur Erstreckungsrichtung der Schrägrille (3) ermittelt wird.

14. Fahrzeugluftreifen nach einem der Ansprüche 1 bis 13, **dadurch gekennzeichnet, dass** in jeder Laufstreifehälfte jeweils ein Profilband (2) mit Schrägrillen (3) vorgesehen ist, sodass ein gepfeiltes Profil gebildet ist.

## Claims

1. Pneumatic vehicle tyre having a tread with a directional tread profile and having at least one profile band (2) which is delimited by two circumferential channels (1, 1') and in which a multiplicity of oblique channels (3) extend, wherein each oblique channel (3) is delimited by two mutually opposite channel flanks (8, 8') and by a channel base (7) which connects the channel flanks (8, 8'),
wherein the oblique channel (3) has a first channel portion (4), a central channel portion (5) and a channel end portion (6), wherein at least two of these portions (4, 5) have mutually different cross-sectional areas, wherein the first channel portion (4) tapers off within the profile band (2), and at least the first and the central channel portion (4, 5) run at an at least substantially equal angle (α) of 10° to 20° with respect to the circumferential direction, wherein, as the tyre rolls, the oblique channel (3) enters the ground contact patch with the first channel portion (4) first,
**characterized**
**in that** the depth of the oblique channel (3), at least in the first channel portion (4), and proceeding from the channel end (3a) which tapers off within the profile band (2), increases in particular continuously to a first depth (T₂), wherein, in the central channel portion (5), proceeding from the first depth (T₂), there is formed a channel base sipe (9) which runs at least over the major part of the extent of the central channel portion (5) and which extends into a second depth (T₁), and wherein, at least in the central channel portion (5), the channel flanks (8, 8') are adjoined by oblique flanks (7c, 7'c) belonging to the channel base (7), which oblique flanks run at an angle (ε) of 40° to 50° with respect to the radial direction.

2. Pneumatic vehicle tyre according to Claim 1, **characterized in that** the oblique flanks (7c, 7'c) continue in the first and in the third channel portion (4, 6).

3. Pneumatic vehicle tyre according to Claim 1 or 2, **characterized in that** the channel base (7) has, in the first channel portion (4), a ramp which runs at an angle (γ) of 10° to 30° with respect to the radial direction.

4. Pneumatic vehicle tyre according to Claim 3, **characterized in that** the ramp, as seen in plan view, is composed of a first, substantially rectangular ramp portion (7a) and a second, substantially triangular ramp portion (7b), wherein the first ramp portion (7a) adjoins the channel end (3a) which tapers off within the profile band (2).

5. Pneumatic vehicle tyre according to Claim 3 or 4, **characterized in that** the ramp (7a, 7b) ends at the channel base sipe (9) of the central channel portion (5) .

6. Pneumatic vehicle tyre according to any of Claims 1 to 5, **characterized in that** the oblique flanks (7c, 7'c) adjoin at least the substantially triangular ramp portion (7b).

7. Pneumatic vehicle tyre according to any of Claims 1 to 6, **characterized in that** the channel base sipe (9) in the central channel portion (5) runs over at least 90% of the extent of said portion (5).

8. Pneumatic vehicle tyre according to any of Claims 1 to 7, **characterized in that** the channel base sipe (9) has a sipe depth (t) of 2.0 mm to 3.0 mm.

9. Pneumatic vehicle tyre according to any of Claims 1 8, **characterized in that** the channel base sipe (9) has a width (B₄) of 0.4 mm to 1.0 mm.

10. Pneumatic vehicle tyre according to any of Claims 1 to 9, **characterized in that** the channel end portion (6) opens into the circumferential channel (1') that delimits the profile band (2) at the tread outer side.

11. Pneumatic vehicle tyre according to Claim 10, **characterized in that** the channel end portion (6) is kinked relative to the central channel portion (5) towards the circumferential channel (1') and runs at an angle (β) of 25° to 55° with respect to the circumferential direction.

12. Pneumatic vehicle tyre according to any of Claims 1 to 11, **characterized in that** the channel base (7) is, in the channel end portion (6), formed by the two oblique flanks (7c, 7c').

13. Pneumatic vehicle tyre according to any of Claims 1 to 12, **characterized in that** the oblique channel (3) has a maximum width of 3.0 mm, wherein the width is determined orthogonally with respect to the direction of extent of the oblique channel (3).

14. Pneumatic vehicle tyre according to any of Claims 1 to 13, **characterized in that** in each case one profile band (2) with oblique channels (3) is provided in each tread half, such that a V-shaped profile is formed.

## Revendications

1. Pneumatique de véhicule doté d'une bande de roulement avec un profil de bande de roulement lié à la direction de marche et au moins une bande de profil (2) limitée par deux rainures périphériques (1, 1'), dans laquelle s'étendent une multiplicité de rainures obliques (3), dans lequel chaque rainure oblique (3) est limitée par deux flancs de rainure opposés l'un à l'autre (8, 8') et un fond de rainure (7) reliant les flancs de rainure (8, 8'), dans lequel la rainure oblique (3) présente une première partie de rainure (4), une partie de rainure moyenne (5) et une partie de rainure finale (6), dans lequel au moins deux de ces parties (4, 5) présentent des aires de section transversale différentes l'une de l'autre, dans lequel la première partie de rainure (4) se termine à l'intérieur de la bande de profil (2) et au moins la première partie de rainure et la partie de rainure moyenne (4, 5) s'étendent sous un angle (α) au moins essentiellement supérieur ou égal à 10° à 20° par rapport à la direction périphérique, dans lequel lors du roulement du pneu la rainure oblique (3) entre en premier dans le support avec la première partie de rainure (4), **caractérisé en ce que** la profondeur de la rainure oblique (3) au moins dans la première partie de rainure (4) et à partir de l'extrémité de rainure (3a) se terminant à l'intérieur de la bande de profil (2) augmente, en particulier de façon continue, jusqu'à une première profondeur (T₂), dans lequel dans la partie de rainure moyenne (5) une entaille de fond de rainure (9) est formée à partir de la première profondeur (T₂), qui s'étend sur au moins la majeure partie de l'extension de la partie de rainure moyenne (5) et arrive à une seconde profondeur (T₁), et dans lequel au moins dans la partie de rainure moyenne (5) des flancs obliques (7c, 7'c) faisant partie du fond de rainure (7) se raccordent aux flancs de rainure (8, 8'), et s'étendent sous un angle (ε) de 40° à 50° par rapport à la direction radiale.

2. Pneumatique de véhicule selon la revendication 1, **caractérisé en ce que** les flancs obliques (7c, 7'c) se prolongent dans la première et dans la troisième parties de rainure (4, 6).

3. Pneumatique de véhicule selon une revendication 1 ou 2, **caractérisé en ce que** le fond de rainure (7) présente dans la première partie de rainure (4) une rampe, qui s'étend sous un angle (γ) de 10° à 30° par rapport à la direction radiale.

4. Pneumatique de véhicule selon la revendication 3, **caractérisé en ce que** la rampe, vue en plan, se compose d'une première partie de rampe essentiellement rectangulaire (7a) et d'une seconde partie de rampe essentiellement triangulaire (7b), dans lequel la première partie de rampe (7a) se raccorde à l'extrémité de rainure (3a) se terminant à l'intérieur de la bande de profil (2).

5. Pneumatique de véhicule selon une revendication 3 ou 4, **caractérisé en ce que** la rampe (7a, 7b) se termine à l'entaille de fond de rainure (9) de la partie de rainure moyenne (5).

6. Pneumatique de véhicule selon l'une quelconque des revendications 1 à 5, **caractérisé en ce que** les flancs obliques (7c, 7'c) se raccordent au moins à la partie de rampe essentiellement triangulaire (7b).

7. Pneumatique de véhicule selon l'une quelconque des revendications 1 à 6, **caractérisé en ce que** l'entaille du fond de rainure (9) dans la partie de rainure moyenne (5) s'étend sur au moins 90 % de l'extension de cette partie (5).

8. Pneumatique de véhicule selon l'une quelconque des revendications 1 à 7, **caractérisé en ce que** l'entaille du fond de rainure (9) présente une profondeur d'entaille (t) de 2,0 mm à 3,0 mm.

9. Pneumatique de véhicule selon l'une quelconque des revendications 1 à 8, **caractérisé en ce que** l'entaille du fond de rainure (9) présente une largeur (B₄) de 0,4 mm à 1,0 mm.

10. Pneumatique de véhicule selon l'une quelconque des revendications 1 à 9, **caractérisé en ce que** la partie de rainure finale (6) débouche dans la rainure périphérique (1') limitant la bande de profil (2) sur le côté extérieur de la bande de roulement.

11. Pneumatique de véhicule selon la revendication 10, **caractérisé en ce que** la partie de rainure finale (6) est coudée vers la rainure périphérique (1') par rapport à la partie de rainure moyenne (5) et s'étend sous un angle (β) de 25° à 55° par rapport à la direction périphérique.

12. Pneumatique de véhicule selon l'une quelconque des revendications 1 à 11, **caractérisé en ce que** le fond de rainure (7) est formé dans la partie de rainure finale (6) par les deux flancs obliques (7c, 7c').

13. Pneumatique de véhicule selon l'une quelconque des revendications 1 à 12, **caractérisé en ce que** la rainure oblique (3) présente une largeur maximale de 3,0 mm, dans lequel la largeur est déterminée orthogonalement à la direction d'extension de la rainure oblique (3).

14. Pneumatique de véhicule selon l'une quelconque des revendications 1 à 13, **caractérisé en ce qu'**il est prévu dans chaque moitié de bande de roulement chaque fois une bande de profil (2) avec des rainures obliques (3), de telle manière qu'il se forme un profil en forme de flèche.
